# FASCICULE DE BREVET EUROPEEN

(11) **EP 1 743 556 B1**
(45) Date de publication et mention de la délivrance du brevet: **21.11.2007**
(21) Numéro de dépôt: 05380151.0
(22) Date de dépôt: 11.07.2005
(51) Int. Cl.: A47J 37/06

(54) **Plaque à rôtir portative**
Tragbares Bratgerät
Portable roaster

(43) Date de publication de la demande: 17.01.2007
(73) Titulaire: Patent 2000, S.L., 48990 Las Arenas-Getxo (Bizkaia) (ES)
(72) Inventeur: Pedreno Jimenez, Jokin, 48220 Abadiano (Bizkaia) (ES)
(74) Mandataire: Urizar Barandiaran, Miguel Angel

(56) Documents cités:
- DE-U1- 9 419 240
- DE-U1- 20 317 712
- FR-A- 2 644 561
- FR-A- 2 827 146

## Description

L'objet de l'invention est une nouvelle plaque à rôtir, portative et à fonctionnement électrique, qui comprend de nouveaux composants et de nouvelles fonctions par rapport à celles qui sont déjà connues. Une telle plaque à rôtir est connue de FR-A-2827146.

La plaque à rôtir portative, conformément à l'invention, se compose de :
a) un récipient métallique recouvert, à l'intérieur, d'une lame réfléchissant les ondes thermiques :
b) une ou plusieurs résistances électriques, disposées à l'intérieur du récipient, mais sans contact direct avec lui, de façon à ce que l'air puisse circuler entre les deux ;
c) une plaque en vitrocéramique qui recouvre la partie supérieure du récipient et caractérisée en ce qu'elle comporte un canal périphérique à sa surface supérieure avec un conduit qui aboutit à un bac de récupération des sauces, disposé sous un rebord de la plaque en vitrocéramique. Ce conduit peut être aussi bien un orifice qu'un petit canal allant vers l'extérieur, sans que l'essence de l'invention en soit altérée.
   Notamment:
   - la plaque vitrocéramique a une disposition légèrement inclinée, l'orifice étant situé au point le plus bas du canal périphérique pour, lors de son utilisation, faciliter l'évacuation automatique des sauces vers le bac ;
   - le bac de récupération des sauces est amovible et démontable de l'ensemble la plaque vitrocéramique et récipient, afin de permettre, par exemple, une redistribution sur le rôti de la sauce récupérée, sans avoir à employer d'ustensiles auxiliaires ;
   - le récipient dispose de deux blocs qui définissent les pieds en matériau isolant et se poursuivent, pour au moins l'un d'entre eux, sur une portion se terminant par une poignée séparée du récipient et sans contact direct avec lui. L'un de ces blocs ou pieds comprend une prise électrique, des commandes et des indicateurs (voyant lumineux) incorporés en connexion interne avec la/les résistance(s) électrique(s).

Pour mieux comprendre l'objet de la présente invention, on présente sur les plans une forme préférentielle de réalisation pratique, susceptible de changements accessoires qui n'en dénaturent pas le fondement.

La figure 1 représente une vue générale schématique en plan de la plaque à rôtir portative, selon l'invention.

La figure 2 représente une section générale schématique de profil en long, selon l'indication A:A de la figure 1.

La figure 3 représente une section générale schématique de profil, selon l'indication B:B de la figure 2.

La figure 4 représente un détail amplifié, selon l'indication de la figure 3.

On décrit ci-dessous un exemple de réalisation pratique, non limitative, de la présente invention.

L'objet de l'invention est une nouvelle plaque à rôtir portative, qui comprend, au moins, les éléments suivants:
1.- Plaque vitrocéramique
2.- Récipient.
3.- Bloc poignée/pied.
5.- Bac de récupération des sauces.
6.- Lame réfléchissante des ondes thermiques.
7.- Résistances électriques.

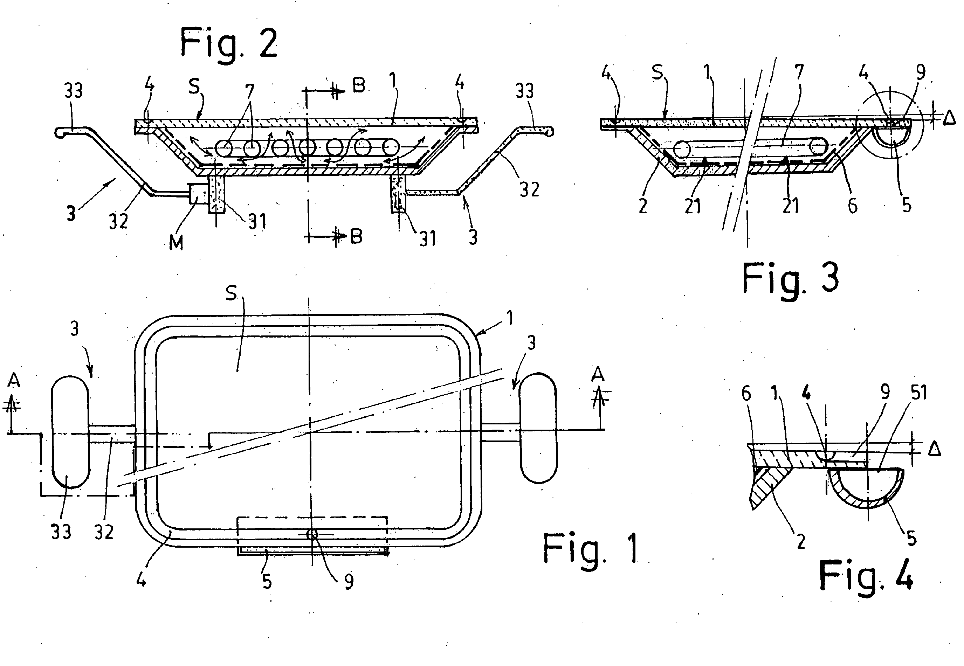

Conformément à l'invention et selon la réalisation représentée, la plaque vitrocéramique (1) définit un canal périphérique (4) sur sa surface supérieure (S) et, pour être opérationnel, il est disposé en position inclinée par rapport au récipient (2); autrement dit, en position d'utilisation, la plaque vitrocéramique (1) demeure légèrement inclinée vers l'un de ses côtés -inclinaison (Δ) représentée sur la figure 3-.

Ce canal périphérique (4) a, de préférence, une configuration fermée -comme sur la figure 1-, pouvant cependant avoir une configuration ouverte sans que, pour cela, l'essence de l'invention en soit altérée. Dans tous les cas, la plaque vitrocéramique (1) comporte un conduit (9) pratiqué au point le plus bas du canal périphérique (4).

Le récipient (2) est de nature métallique et recouvert, à l'intérieur, d'une lame (6) qui réfléchit les ondes thermiques.

À l'intérieur, ce récipient (2) dispose d'un ou plusieurs appuis (21) pour y installer les résistances électriques (7), sans contact direct avec le récipient (2), pour que l'air puisse circuler entre les deux.

Le récipient (2) est muni de poignées (33) et de pieds (31); les deux étant en matériau isolant.

Conformément à l'invention et selon la réalisation représentée, les poignées (33) et les pieds (31) sont constitués en monoblocs (3), en matériau isolant, qui les définissent en continuité (32) séparée du récipient (2). Dans l'un d'entre eux -voir figure 2- on dispose une prise électrique, des commandes et des indicateurs de fonctionnement, qui peuvent indistinctement être montés dans un ensemble monobloc (M) ou comme éléments indépendants.

Le bac de récupération des sauces (5) est disposé sur la plaque vitrocéramique (1), et il peut être démonté et placé à l'opposite sous le conduit (9), de façon à faciliter aussi bien l'évacuation automatique des sauces produites à la surface (S) pendant que l'on utilise le gril -à travers tout d'abord du canal périphérique et ensuite du conduit (9)- que son retrait ou redistribution sur le rôti, en démontant le bac (5).

Ce conduit (9) peut être aussi bien un orifice de passage dans la plaque vitrocéramique (1), comme on l'a représenté sur la figure 3 ou, de préférence, un petit canal ou conduit extérieur, qui arrive au côté le plus proche de la plaque vitrocéramique (1), comme on l'a représenté sur le détail amplifié de la figure 4, auquel cas le bac de récupération des sauces (5) est disposé avec son orifice d'admission (51) au-delà du bord de la plaque vitrocéramique (1).

## Revendications

1. Plaque à rôtir portative comprenant :
a) un récipient (2) de nature métallique recouvert à l'intérieur d'une lame réfléchissante (6) des ondes thermiques ;
b) une ou plusieurs résistances électriques (7), disposées à l'intérieur du récipient (2) mais sans contact direct avec lui, de façon à ce que l'air puisse circuler entre les deux ;
c) une plaque en, vitrocéramique (1) recouvrant la partie supérieure du récipient (2) et **caractérisée en ce que** la plaque en vitrocéramique (1) un canal (4) périphérique à sa surface supérieure (S) avec un conduit (9) qui aboutit à un bac de récupération des sauces (5) disposé sous un rebord de la plaque en vitrocéramique (1).

2. Plaque à rôtir portative, selon revendication antérieure, **se caractérisant par le fait que** la(les) résistance(s) électrique(s) (7) est/sont disposée(s) sur, au moins, deux appuis (21) l'air pouvant circuler entre le récipient (2), la plaque vitrocéramique (1) et la/les résistance(s) elle(s)-même(s).

3. Plaque à rôtir, selon les revendications antérieures, **se caractérisant par le fait que** la plaque vitrocéramique (1) a une disposition légèrement inclinée avec le conduit (9) situé au point le plus bas du canal périphérique (4) pour faciliter, lors de son utlisation, l'évacuation automatique des sauces vers le bac (5).

4. Plaque à rôtir portative, selon les revendications antérieures, **se caractérisant par le fait que** le bac de récupération des sauces (5) est amovible et démontable de l'ensemble plaque vitrocéramique (1) et récipient (2).

5. . Plaque à rôtir portative, selon les revendications antérieures, **se caractérisant par le fait que** le récipient (2) dispose de deux blocs (3) qui définissent les pieds (31) en matériau isolant, et qui se poursuivent, du moins pour l'un entre eux, sur une portion (32) se terminant en poignée (33) séparée du récipient (2) et sans contact direct avec lui.

6. Plaque à rôtir portative, selon les revendications antérieures, **se caractérisant par le fait que** sur l'un de ces blocs (3) ou pieds (31), on dispose une prise électrique, des commandes et des indicateurs de fonctionnement.

7. . Plaque à rôtir portative, selon les revendications antérieures, **se caractérisant par le fait que** ledit conduit (9) est un orifice de passage dans la plaque vitrocéramique (1).

8. . Plaque à rôtir portative, selon les revendications 1 à 6, **se caractérisant par le fait que** ledit conduit (9) est un petit canal allant à l'extérieur, qui aboutit au côté le plus proche de la plaque vitrocéramique (1).

## Claims

1. A portable griddle, which consists of the following:
a) a metal container (2) lined on the interior with a thermal wave reflector sheet (6);
b) one or several heating elements (7) positioned within the container (2), but not in direct contact it with it, such that air circulates between them both;
c) a vitroceramic plate (1) covering the container (2) on top, **characterised** because the vitroceramic plate is equipped with a peripheral channel (4) on its top surface (S), which has an outlet (9) that leads to a drip tray (5) positioned underneath one edge of the vitroceramic plate (1).

2. A portable grill in accordance with the preceding claim, **characterised** because the electric heating element(s) (7) is/are positioned on at least two supports (21) where air can circulate between them, the container (2), the vitroceramic plate (1) and the heating element(s) (7) itself/themselves.

3. A portable grill in accordance with the preceding claims, **characterised** because the vitroceramic plate (1) is positioned at a slight angle, with the outlet (9) located at the lowest point of the peripheral channel (4) so that, when in use, it facilitates the automatic drainage of sauces to the drip tray (5).

4. A portable grill in accordance with the preceding claims, **characterised** because the drip tray (5) is removable with respect to the rest of the vitroceramic plate (1) and container (2) assembly.

5. A portable grill in accordance with the preceding claims, **characterised** because the container (2) has matching blocks (3) that define the feet (31) of the insulating material, and at least one of them continues into a finished section (32) as a handle (33) separated from the container (2) and not directly in contact with it.

6. A portable grill in accordance with the preceding claims, **characterised** because an outlet, controls and operating indicators are equipped on one of said blocks (3) or feet (31).

7. A portable grill in accordance with the preceding claims, **characterised** because said outlet (9) is a hole passing through the vitroceramic plate (1).

8. A portable grill in accordance with claims 1 to 6, **characterised** because said outlet (9) is a curved channel towards the exterior, which reaches the closest side of the vitroceramic plate (1).

## Patentansprüche

1. Tragbarer Tischgrill, bestehend aus:
a) einem metallartigen Behälter (2), der innen mit einer wärmewellenreflektierenden Schicht (6) verkleidet ist;
b) einem oder mehreren elektrischen Widerständen (7), die zwar im Behälterinnern (2) angeordnet sind, aber keinen unmittelbaren Kontakt dazu haben, so dass zwischen Beiden Luft strömen kann;
c) einer Glaskeramikplatte (1), die den Behälter (2) oberhalb abdeckt und sich **dadurch kennzeichnet, dass** die Glaskeramikplatte auf der Oberfläche (S) über eine Konturrinne (4) mit einer Leitung (9) verfügt, die in eine Soßenauffangwanne (5) mündet, die unter einer Kante der Glaskeramikplatte (1) angeordnet ist.

2. Tragbarer Tischgrill laut obigem Patentanspruch, der sich **dadurch kennzeichnet, dass** der (die) elektrische (n) Widerstand (Widerstände) (7) mindestens auf zwei Stützen (21) angeordnet sind, zwischen denen, dem Behälter (2), der Glaskeramikplatte (1) und dem (den) Widerstand (Widerständen) (7) selbst, Luft strömen kann.

3. - Tragbarer Tischgrill laut obigem Patentanspruch, der sich **dadurch kennzeichnet, dass** die Glaskeramikplatte (1) leicht geneigt angeordnet ist und sich die Leitung (9) an der tiefsten Stelle der Konturrinne (4) befindet, damit während des Gebrauchs das automatische Ablaufen der Soßen Richtung Wanne (5) erleichtert wird.

4. Tragbarer Tischgrill laut obigem Patentanspruch, der sich **dadurch kennzeichnet, dass** die Soßenauffangwanne (5) aus der Glaskeramik - (1) und Behälterbaugruppe (2) aus- und wieder eingebaut werden kann.

5. Tragbarer Tischgrill laut obigem Patentanspruch, der sich **dadurch kennzeichnet, dass** der Behälter (2) zwei Blöcke (3) besitzt, welche die Stempel (31) aus Isoliermaterial bilden, von denen zumindest einer zu einem Teil (32) fortgesetzt wird, das zu einem vom Behälter (2) getrennten Griff (33) ausläuft und keinen direkten Kontakt dazu hat.

6. Tragbarer Tischgrill laut obigem Patentanspruch, der sich **dadurch kennzeichnet, dass** an einem dieser Blöcke (3) oder Stempel (31) Stecker, Schalter und Betriebsanzeiger angebracht sind.

7. Tragbarer Tischgrill laut obigem Patentanspruch, der sich **dadurch kennzeichnet, dass** die besagte Leitung (9) eine Durchgangsöffnung in der Glaskeramikplatte (1) ist.

8. Tragbarer Tischgrill laut Patentansprüchen 1 bis 6, der sich **dadurch kennzeichnet, dass** die besagte Leitung (9) eine Rinne nach außen ist, die an die der Glaskeramikplatte (6) am nächsten gelegenen Seite angrenzt.
